# EUROPÄISCHE PATENTSCHRIFT

(11) **EP 0 637 497 B1**
(45) Veröffentlichungstag und Bekanntmachung des Hinweises auf die Patenterteilung: **29.07.1998**
(21) Anmeldenummer: 94106289.5
(22) Anmeldetag: 22.04.1994
(51) Int. Cl.: B29C 47/10

(54) **Kunststoffschweissgerät**
Welder for thermoplastic materials
Soudeuse pour matières thermoplastiques

(30) Priorität: 05.08.1993 DE 9311705 U
(43) Veröffentlichungstag der Anmeldung: 08.02.1995
(73) Patentinhaber: WEGENER GmbH, D-52074 Aachen (DE)
(72) Erfinder: Weissfloch, Reinhard, Dr., D-52223 Stolberg (DE)
(74) Vertreter: Paul, Dieter-Alfred, Dipl.-Ing.

(56) Entgegenhaltungen:
- EP-A- 0 364 701
- DE-A- 2 823 171
- DE-A- 3 808 723
- DE-U- 8 612 130
- PATENT ABSTRACTS OF JAPAN vol. 11, no. 348 (M-642) 14. November 1987 & JP-A-62 128 710 (FUJI ELECTRIC CO. LTD.) 11. Juni 1987
- PATENT ABSTRACTS OF JAPAN vol. 12, no. 52 (M-668) 17. Februar 1988 & JP-A-62 199 408 (KASAMATSU KAKO KENKYUSHO KK) 3. September 1987

## Beschreibung

Die Erfindung betrifft ein Kunststoffschweißgerät mit wenigstens einem Förderkanal und einer diesem zugeordneten Fördereinrichtung für einen Kunststoffstrang, wobei der Förderkanal über eine Öffnung in eine Zerkleinerungseinrichtung mündet, die ein um eine Messerdrehachse rotierbares Messerelement mit wenigstens einem eine Schneidkante aufweisenden Messer hat, und wobei sich an die Zerkleinerungseinrichtung eine Transport- und eine Plastifiziereinrichtung zur Plastifizierung und für den Ausstoß des zerkleinerten Kunststoffmaterials anschließen.

Solche Kunststoffschweißgeräte werden zum Verschweißen von Kunststoffplatten oder dergleichen verwendet. Sie bestehen im wesentlichen aus einer Handbohrmaschine, die als Antrieb dient, und einem darauf abnehmbar aufgesetzten Vorsatzgerät. In dem Vorsatzgerät wird ein über einen Förderkanal - es können auch mehrere parallele Förderkanäle vorgesehen sein - und eine Fördereinrichtung zugeführter Kunststoffstrang in Form eines Kunststoffdrahtes zunächst zerstückelt und dann in einer meist als Transportschnecke ausgebildeten Transporteinrichtung und einer Plastifiziereinrichtung derart erwärmt, daß das zerstückelte Kunststoffmaterial einen plastischen Zustand einnimmt und über ein Mundstück als Schweißmaterial ausgestoßen wird.

In der DE-A-28 23 171 ist ein gattungsgemäßes Kunststoffschweißgerät offenbart. Bei diesem Kunststoffschweißgerät wird der Kunststoffdraht mittels der Fördereinrichtung einer gesonderten Zerkleinerungseinrichtung zugeführt. Diese Zerkleinerungseinrichtung besteht aus einer Mehrzahl von Messern, die auf dem Mantel der Transportschnecke im eingangsseitigen Bereich radial nach außen vorstehend über den Umfang verteilt angeordnet sind. Dabei erstrecken sich die Schneidkanten parallel zur Drehachse der Transportschnecke und streichen bei ihrer Drehung - angetrieben von der Handbohrmaschine - über eine Öffnung des Förderkanals in einem die Zerkleinerungseinrichtung umgebenden Gehäusemantel.

Die vorbekannte Zerkleinerungseinrichtung bereitet bei der Zerkleinerung des Kunststoffdrahtes Schwierigkeiten. So ist die Kapazität der Zerkleinerungseinrichtung notwendigerweise deshalb gering, weil für die Förderung des Kunststoffdrahtes zwischen zwei Messern nur ein Weg zur Verfügung steht, der in etwa der Höhe der Messer entspricht. Außerdem ist der Weitertransport des zerkleinerten Kunststoffmaterials nicht hinreichend gesichert, da die Zwischenräume zwischen einzelnen Messern keine Verbindung zu den Schneckengängen der Transportschnecke haben.

Ein wesentlicher Nachteil besteht zudem darin, daß der in die Zerkleinerungseinrichtung eingeförderte Teil des Kunststoffdrahtes nicht sauber abgeschnitten, sondern eher abgschlagen wird. Dies beruht darauf, daß die Schneidkanten bei einer Zerkleinerungseinrichtung dieser Art nicht nahe genug an den umgebenden Gehäusemantel angenähert werden dürfen, um der Transportschnecke hinreichend Spiel für Durchbiegungen zu lassen. Da es sich bei Kunststoffdraht um relativ zähes Material handelt, kommt es beim Abschlagen der aus der Öffnung herausragenden Enden zu unvollkommenen Abtrennungen und Verkantungen des Kunststoffdrahtes innerhalb des Förderkanals, und zwar insbesondere im Bereich der Öffnung des Förderkanals. Dies wiederum führt zu Störungen der Förderung des Kunststoffdrahtes und damit letztendlich zum Gerätestillstand, was für einen gerade laufenden Schweißvorgang besonders nachteilig ist.

Aus den vorgenannten Gründen ist ein Kunststoffschweißgerät der in der DE-A-28 23 171 beschriebenen Art nicht auf den Markt gekommen. In einer Weiterentwicklung des Kunststoffschweißgerätes hat die Anmelderin der DE-OS 28 23 171 auf die problematische Zerkleinerungseinrichtung verzichtet (DE-C-32 21 492). Bei diesem Kunststoffschweißgerät wird der Kunststoffdraht unzerstückelt bis zur Transportschnecke der Transporteinrichtung geführt und dort von der Transportschnecke selbst zerstückelt (vgl. auch DE-A-21 42 689). Als Fördereinrichtung dient dabei eine einstückig mit der Transportschnecke eingangsseitig verbundene Förderwalze, die auf ihrem Umfang eine gewindeartige Profilierung hat, wobei der Förderkanal in einem Teilabschnitt parallel zur Drehachse der Förderwalze geführt und zu dieser hin offen gestaltet ist, und zwar derart, daß die Profilierung in den Außenmantel des Kunststoffdrahtes einkerben, kann.

Es hat sich gezeigt, daß auch bei dieser Lösung kein sauberes Abschneiden der über den Förderkanal eingeführten Enden des Kunststoffdrahtes erreichbar ist. Die abgeschnittenen Längen des Kunststoffdrahtes sind sehr ungleichmäßig, was zur Folge hat, daß der aus dem Mundstück des Kunststoffschweißgerätes austretende, plastifizierte Kunststoffstrang inhomogen ist. Dies wiederum beeinträchtigt die Qualität der Schweißnaht.

Um insoweit eine Verbesserung zu erzielen, ist in der DE-A-38 35 250 der Vorschlag gemacht worden, den Förderkanal, der ebenfalls als profilierte Förderwalze ausgebildeten Fördereinrichtung so zuzuführen, daß der Kunststoffdraht schon von der schneckenartig ausgebildeten Profilierung der Förderwalze zumindest vorzerkleinert wird.

Da die Profilierung der Förderwalze sowohl Förder- als auch Schneidfunktion haben muß, kommt es auch hier nicht zu einem sauberen Zerkleinern des Kunststoffdrahtes. Das Problem der Inhomogenität und damit letztendlich der Schweißqualität ist deshalb auch mit dieser Ausbildung eines Kunststoffschweißgerätes nicht befriedigend gelöst.

Der Erfindung liegt deshalb die Aufgabe zugrunde, ein Kunststoffschweißgerät so zu gestalten, daß der Ausstoß eines homogenen plastifizierten Kunststoffstrangs gewährleistet ist.

Diese Aufgabe wird erfindungsgemäß dadurch gelöst, daß die von der bzw. den Schneidkante(n) bei der Rotation des Messerelements erzeugte Rotationsfläche mit ihrer auf die Messerdrehachse gerichteten Fortsetzung die Messerdrehachse schneidet und daß zumindest ein im Bereich der Öffnung des Förderkanals liegender Teil bzw. die im Bereich der Öffnungen der Förderkanäle liegenden Teile der Rotationsfläche als Gegenmesser ausgebildet ist bzw. sind. Dabei ist unter Rotationsfläche eine fiktive Fläche zu verstehen, die bei der Verdrehung des Messerelements von allen Punkten der Schneidkante(n) erzeugt wird.

Mit dieser Lösung wird auf einen Stand der Technik in Form der DE-A-28 23 171 zurückgegriffen, von dem sich die weitere Entwicklung des Standes der Technik (vgl. DE-C-32 21 492 und DE-C-38 35 250) wegen deren offensichtlicher Nachteile schon gelöst hatte. Dabei ist die Zerkleinerungseinrichtung jetzt so gestaltet worden, daß das Messerelement durch einfache axiale Einstellung beliebig nahe an die Öffnung des Förderkanals bzw. die Öffnungen der Förderkanäle herangeführt werden kann, so daß die Öffnung bzw. die Öffnungen als Gegenmesser wirkt bzw. wirken, Messer und Gegenmesser also einen sauberen Schneidvorgang wie bei einer Schere bewirken. Versuche haben gezeigt, daß sich der Kunststoffdraht trotz seiner zähen Konsistenz in immer gleich große Einzelstücke zerkleinern läßt, ohne daß es dabei zu Schwierigkeiten bei der Zufuhr des Kunststoffdrahtes im Förderkanal kommt. Dies wiederum hat eine wesentliche Verbesserung der Homogenität und damit letztendlich der Schweißqualität zur Folge. Durch den Zerkleinerungsvorgang bewirkte Betriebsunterbrechungen treten praktisch nicht mehr auf.

Die konkrete Ausgestaltung des Grundgedankens der Erfindung kann in verschiedener Weise erfolgen. So ist es denkbar, daß die Schneidkante(n) durch entsprechend geneigte Anordnung zur Messerdrehachse eine einen Kegelstumpfmantel bildende Rotationsfläche erzeugen. Herstellungstechnisch einfacher ist jedoch eine Ausbildung, bei der die Rotationsfläche eine senkrecht zur Messerdrehachse stehende Ebene ist, zumal dann das bzw. die Gegenmesser jeweils ebenfalls als zur Messerdrehachse senkrecht stehende Ebenen ausgebildet sind. Um eine hohe Zerkleinerungsleistung zu erreichen, empfiehlt es sich dabei, das Messerelement mit einer Mehrzahl von Messern auszustatten, beispielsweise mit sich radial erstreckenden Schneidkanten nach Art eines Schneidsterns.

Nach einem weiteren Merkmal der Erfindung ist vorgesehen, daß die Fördereinrichtung eine um eine Walzendrehachse rotierbare Förderwalze aufweist und der Förderkanal bzw. die Förderkanäle im Bereich der Förderwalze jeweils wenigstens über ein Teilstück parallel zur Walzendrehachse verläuft bzw. verlaufen und zur Förderwalze hin offen ist bzw. sind und daß die Förderwalze eine in den Förderkanal bzw. die Förderkanäle hineinreichende, eine Förderbewegung des Kunststoffstrangs bewirkende Profilierung, beispielsweise in Form wenigstens eines schraubenförmigen Fördersteges oder mehrerer, in mehrgängiger Ausbildung verlaufender Förderstege, trägt. Diese an sich aus der DE-C-32 21 492 bekannte Ausbildung der Fördereinrichtung läßt eine besonders kompakte und schlanke Formgebung des Kunststoffschweißgerätes zu. Dabei ist es zweckmäßig, daß der Förderkanal bzw. die Förderkanäle jeweils im Abstand zum Gegenmesser wieder in einen geschlossenen Teilabschnitt übergehen, der bis zum zugehörigen Gegenmesser reicht. Auf diese Weise wird der Kunststoffstrang im Bereich der Zerkleinerungseinrichtung allseitig umschlossen und deshalb einwandfrei geführt, was einen sauberen Schnitt in der Zerkleinerungseinrichtung zur Folge hat.

Auf die vorbeschriebene Ausbildung kann verzichtet werden, wenn die Schneidkanten der Messer derart ausgerichtet sind, daß sie einen schräg radial nach außen gerichteten Schneiddruck erzeugen. Auf diese Weise ist gesichert, daß auch dann, wenn kein geschlossener Teilabschnitt vorgesehen ist, die Schnittkräfte immer gegen eine Wandung des Förderkanals bzw. der Förderkanäle wirken und damit ein sauberer Schnitt erzielt wird. Die Lösung ist fertigungstechnisch einfacher.

In weiterer Ausgestaltung der Erfindung ist vorgesehen, daß das Messerelement am ausgangsseitigen Ende der Förderwalze befestigt ist. Sofern die Transporteinrichtung eine um eine Schneckendrehachse rotierbare Transportschnecke aufweist, kann das Messerelement auch koaxial am eingangsseitigen Ende der Transportschnecke angebracht sein. In besonders bevorzugter Ausbildung sind Förderwalze und Transportschnecke koaxial zueinander angeordnet und drehfest miteinander verbunden, wobei das Messerelement zwischen beiden angeordnet, insbesondere eingespannt ist.

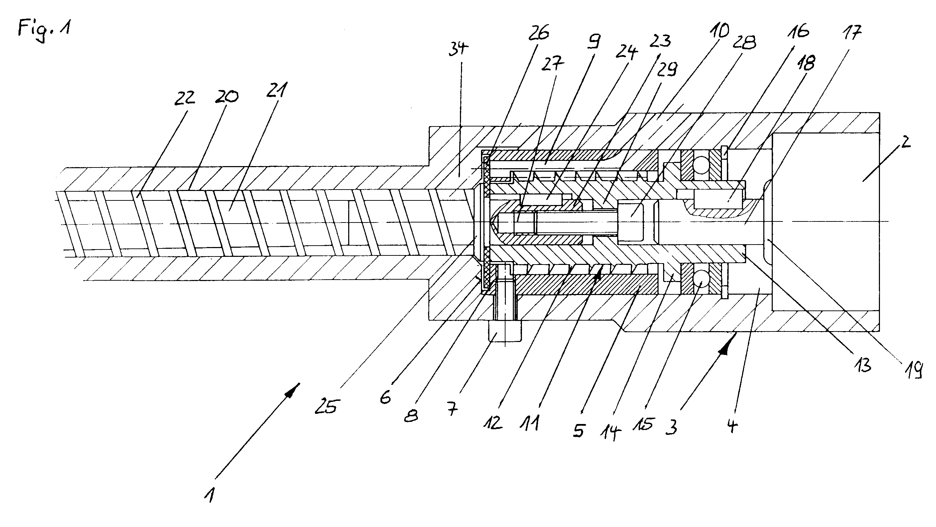

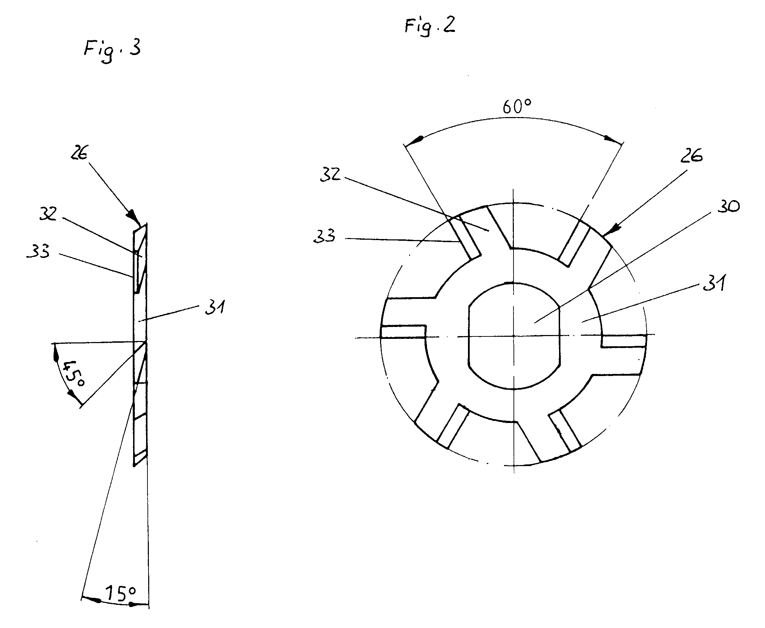

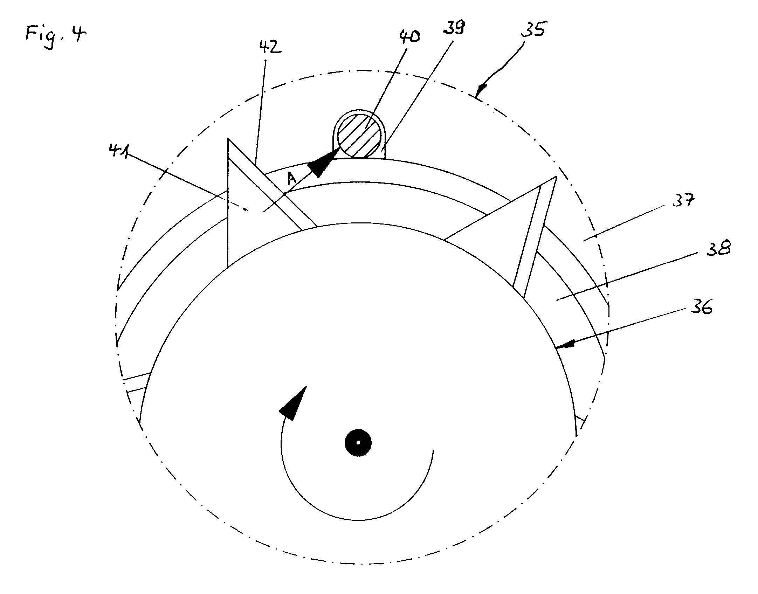

In der Zeichnung ist die Erfindung an Hand eines Ausführungsbeispiels näher veranschaulicht. Es zeigen,
- Figur (1): einen teilweisen Längsschnitt durch ein Vorsatzgerät für ein Kunststoffschweißgerät und
- Figur (2): eine Draufsicht auf ein Messerelement des Kunststoffschweißgerätes gemäß Figur (1);
- Figur (3): eine Seitenansicht des Messerelements gemäß Figur (2) und
- Figur (4): eine Draufsicht auf ein weiteres Messerelement.

Figur (1) stellt teilweise ein Kunststoffschweißgerät dar, und zwar nur das Vorsatzgerät (1) für die Anbringung an einer Handbohrmaschine. Hierzu weist das Vorsatzgerät (1) in dieser Ansicht rechtsseitig eine Aufnahmebohrung (2) auf, in die der Bohrkopf der Handbohrmaschine passend einsetzbar ist. Die Aufnahmebohrung (2) sitzt in einem mehrfach gestuften, jeweils zylindrischen Gehäuse (3).

Das Gehäuse (3) hat im Anschluß an die Aufnahmebohrung (2) eine reduzierte Axialbohrung (4), in die eine zylindrische Einsatzhülse (5) bis zu einer die Axialbohrung (4) beendenden Ringabsatzfläche (6) eingesetzt ist. Die Einsatzhülse (5) ist mit Hilfe einer sich radial durch das Gehäuse (3) erstreckenden und in die Einsatzhülse (5) einfassenden Schraube (7) lagefixiert. Die Innenfläche der Einsatzhülse (5) ist gestuft, d.h. über den größten Bereich hat die Innenfläche einen größeren Durchmesser als in einem der Ringabsatzfläche (6) benachbarten Endbereich (8). Im oberen Bereich durchzieht die Einsatzhülse (5) ein sich axial erstreckender Teilabschnitt eines Förderkanals (9). Er ist zur Ringabsatzfläche (6) hin gerichtet offen und hat einen solchen Durchmesser, daß er im Endbereich (8) der Einsatzhülse (5) rohrförmig ist, jedoch in dem sich daran in Richtung auf die Aufnahmebohrung (2) anschließenden Teil nach innen hin offen ist. Am Ende des offenen Bereichs biegt der Förderkanal (9) schräg nach oben und setzt sich in einer Schrägbohrung (10) fort, die das Gehäuse (3) durchdringt.

In der Einsatzhülse (5) erstreckt sich eine Förderwalze (11), deren Mantel mit einem im Querschnitt sägezahnförmigen Schraubensteg (12) umgeben ist. Der Schraubensteg (12) geht bis zur Innenwandung der Einsatzfläche (5) und ragt deshalb auch in den offenen Bereich des Förderkanals (9) hinein. Die Förderwalze (11) hat eine zur Aufnahmebohrung (2) hinausragenden Lagerabschnitt (13), der sich mit einem Ringsteg (14) an einem Axialkugellager (15) abstützt. Dieses wiederum liegt an einem in die Innenwandung des Gehäuses (3) eingesetzten Stützring (16) an.

In eine Axialbohrung der Förderwalze (11) ragt eine Antriebswelle (17) hinein, die über eine Paßfeder (18) drehfest mit dem Lagerabschnitt (13) der Förderwalze (11) verbunden ist. Die Antriebswelle (17) hat einen Flansch (19), über den sie mit dem Bohrkopf der Handbohrmaschine verbindbar ist.

An die Axialbohrung (4) im Gehäuse (3) schließt sich eine um die Ringabsatzfläche (6) verengte Schneckenbohrung (20) an, die koaxial zu der Axialbohrung (4) bzw. der Aufnahmebohrung (2) liegt. Die Schneckenbohrung (20) geht - was hier nicht näher dargestellt ist - in ein Mundstück über. In der Schneckenbohrung (20) ist eine Transporschnecke (21) angeordnet, die mit einem Schneckensteg (22) versehen ist. Die Transportschnecke (21) weist einen in eine Bohrung der Förderwalze (11) hineinragende Fortsatz auf, der über eine Paßfeder (24) eine drehfeste Verbindung mit der Förderwalze (11) hat.

Am eingangsseitigen Ende hat die Transportschnecke (21) einen radial nach außen vorstehenden Stützringsteg (25). Zwischen Stützringsteg (25) und der diesem gegenüberliegenden Stirnfläche der Förderwalze (11) ist ein Messerelement (26) eingespannt. Die Verspannung wird dadurch erreicht, daß der Fortsatz (23) eine zum freien Ende hin offene Gewindebohrung (27) aufweist, in die eine Spannschraube (28) einfaßt, deren Kopf sich auf einem an der Innenseite der Förderwalze (11) vorspringenden Ringsteg (29) abstützt. Durch Anziehen der Spannschraube (28) werden der Fortsatz (23) und damit die Transportschnecke (21) in Richtung auf die Stirnfläche der Förderwalze (11) gezogen und verspannen damit das Messerelement (26) zwischen Stützringsteg (25) und gegenüberliegender Stirnfläche der Förderwalze (11).

Das Messerelement (26) hat eine solche radiale Erstreckung, daß es nahezu die gesamte Stirnfläche der Einsatzhülse (5) und dabei insbesondere die Öffnung des Förderkanals (9) überstreicht. Dabei sind die Lagefixierung der Einsatzhülse (5) und die axiale Abstützung der Förderwalze über das Axialkugellager (15) bzw. den Stützring (16) so aufeinander abgestimmt, daß das Messerelement (26) in etwa an der dortigen Stirnseite der Einsatzhülse (5) anliegt oder zwischen beiden nur ein geringes Spiel vorhanden ist.

Die genaue Ausbildung des Messerelements (26) ergibt sich aus den Figuren (2) und (3). Das Messerelement (26) hat eine nicht kreisrunde Mittenöffnung (30), mit der das Messerelement (26) auf einem an diese angepaßten Abschnitt des Fortsatzes (23) sitzt, so daß beide drehfest miteinander verbunden sind. Die Mittenöffnung (30) wird von einem Ringabschnitt (31) umgeben, von dem insgesamt sechs nach außen gerichtete Messer - beispielhaft mit (32) bezeichnet - ausgehen. In der vorgesehenen Drehrichtung weisen die Messer (32) jeweils eine Schneidkante - beispielhaft mit (33) bezeichnet - auf. Die Schneidkanten (33) verlaufen radial zum Mittelpunkt bzw. zur Messerdrehachse des Messerelements (26).

Für den Betrieb des Kunststoffschweißgerätes wird das Vorsatzgerät (1) an eine Handbohrmaschine durch Einsetzen von deren Bohrkopf in die Aufnahmebohrung (2) und Kupplung mit der Antriebswelle (17) verbunden. Ferner wird eine hier nicht nähre dargestellte Heizeinrichtung in Gang gesetzt, die an dem nicht dargestellten Abschnitt der Schneckenbohrung (20) bzw. der Transportschnecke (21) angebracht ist. Ober die Schrägbohrung (10) wird dann ein Kunststoffdraht in den Förderkanal (9) eingeführt.

Durch Anschalten der Handbohrmaschine werden die Antriebswelle (17), die Förderwalze (11), der Fortsatz (23) und damit die Transportschnecke (21) sowie das Messerelement (26) in Drehung versetzt. Dabei ist die Drehrichtung so, daß der Schraubensteg (12) eine Förderwirkung in Richtung auf die Transportschnecke (21) entwickelt, d.h. der in den Förderkanal (9) eingeführte Kunststoffdraht wird in Richtung auf den rohrförmigen Endabschnitt des Förderkanals (9) transportiert, indem der Schraubensteg (12) sich mit seinen Spitzen in den Mantel des Kunststoffdrahtes eingräbt.

Im Bereich des Messerelements (26) wird der Kunststoffdraht, wenn er zwischen zwei umlaufenden Messern (32) aus dem Förderkanal (9) ausgetreten ist, von dem in Umlaufrichtung nachfolgenden Messer (32) sauber abgeschnitten. Dabei wirkt die Öffnung des Förderkanals (9) in der Stirnseite der Einsatzhülse (5) als Gegenmesser. Das so zerstückelte Kunststoffmaterial gelangt dann über eine schräg verlaufende Ausnehmung (34) im Gehäuse (3) in den Bereich der Transportschnecke (21) und wird dann von dieser in der gezeigten Ansicht nach links gefördert. Aufgrund der dabei auftretenden Reibung erwärmen sich die zerstückelten Teile des Kunststoffmaterials, wobei die Erwärmung in der nachfolgenden, hier nicht dargestellten Heizeinrichtung soweit getrieben wird, daß das Kunststoffmaterial plastisch wird und sich zu einem homogenen, plastifizierten Kunststoffstrang umwandelt. Dieser Strang wird dann fortlaufend aus dem Mundstück des Vorsatzgerätes (1) ausgestoßen und bildet dann das Schweißmaterial für die zu verschweißenden Gegenstände.

Figur (4) stellt einen Querschnitt durch ein anderes Vorsatzgerät (35) mit Blick auf ein Messerelement (36) im Vordergrund sowie eine Einsatzhülse (37) und eine Förderwalze (38) im Hintergrund dar. Dabei durchläuft die Einsatzhülse (37) ein nach unten in Richtung auf die Förderwalze (38) offenen, U-förmigen Förderkanal (39), in dem ein Kunststoffdraht (40) sitzt.

Das Messerelement (36) hat radial nach außen vorstehende Messer - beispielhaft mit (41) bezeichnet -, welche Dreieckform haben. Deren Schneidkanten - beispielhaft mit (42) bezeichnet - verlaufen im Unterschied zu der Ausführungsform gemäß den Figuren (2) und (3) nicht radial, sondern schräg zur Radialrichtung in der Weise, daß die Senkrechte auf die Schneidkanten (42) schräg nach außen gerichtet ist. Auf diese Weise wirkt beim Schneidvorgang auf den Kunststoffdraht (40) ein entsprechend nach außen gerichteter Schneiddruck, symbolisiert durch den Pfeil (A). Dabei wird der Kunststoffdraht (40) in dieser Richtung voll von der Innenseite des Förderkanals (39) abgestützt. Der Förderkanal (39) braucht in diesem Fall nicht nach unten hin geschlossen ausgebildet sein.

## Patentansprüche

1. Kunststoffschweißgerät (1) mit wenigstens einem Förderkanal (9, 39) und einer diesem zugeordneten Fördereinrichtung (11, 38) für einen Kunststoffstrang, wobei der Förderkanal (9, 39) bzw. die Förderkanäle über jeweils eine Öffnung in eine Zerkleinerungseinrichtung mündet bzw. münden, die ein um eine Messerdrehachse rotierbares Messerelement (26, 36) mit wenigstens einem eine Schneidkante (42) aufweisenden Messer (32, 41) hat, und wobei sich an die Zerkleinerungseinrichtung eine Transport- und eine Plastifiziereinrichtung (20, 21, 22) zur Plastifizierung und für den Ausstoß des Kunststoffmaterials anschließen,
dadurch gekennzeichnet, daß die von der bzw. den Schneidkante(n) (33, 42) bei der Rotation des Messerelements (26, 36) erzeugte Rotationsfläche mit ihrer auf die Messerdrehachse gerichteten Fortsetzung die Messerdrehachse schneidet und daß zumindest ein im Bereich der Öffnung des Förderkanals (9, 39) liegender Teil bzw. die im Bereich der Förderkanäle liegenden Teile der Rotationsfläche als Gegenmesser ausgebildet ist bzw. sind.

2. Kunststoffschweißgerät nach Anspruch (1),
dadurch gekennzeichnet, daß die Rotationsfläche eine senkrecht zur Messerdrehachse stehende Ebene ist.

3. Kunststoffschweißgerät nach Anspruch (1) oder (2),
dadurch gekennzeichnet, daß das Messerelement (26, 36) mit einer Mehrzahl von Messern (32, 41) ausgestattet ist.

4. Kunststoffschweißgerät nach einem der Ansprüche (1) bis (3) dadurch gekennzeichnet, daß die Fördereinrichtung eine um eine Walzendrehachse rotierbare Förderwalze (11, 38) aufweist und der Förderkanal (9, 39) bzw. die Förderkanäle im Bereich der Förderwalze (11, 38) jeweils wenigstens über ein Teilstück parallel zur Walzendrehachse verläuft bzw. verlaufen und zur Förderwalze (11, 38) hin offen ist bzw. sind und daß die Förderwalze (11, 38) eine in den Förderkanal (9, 39) bzw. Förderkanäle hineinreichende, eine Förderbewegung des Kunststoffstrangs bewirkende Profilierung (12) trägt.

5. Kunststoffschweißgerät nach Anspruch (4),
dadurch gekennzeichnet, daß die Profilierung als wenigstens ein schraubenförmiger Fördersteg (12) ausgebildet ist.

6. Kunststoffschweißgerät nach Anspruch (5),
dadurch gekennzeichnet, daß die Profilierung als in mehrgängiger Ausbildung verlaufende Förderstege ausgebildet ist.

7. Kunststoffschweißgerät nach Anspruch (6),
dadurch gekennzeichnet, daß der Förderkanal (9) bzw. die Förderkanäle einen der jeweiligen Öffnung benachbarten Teilabschnitt aufweist bzw. aufweisen, der geschlossen ausgebildet ist.

8. Kunststoffschweißgerät nach einem der Ansprüche (4) bis (7),
dadurch gekennzeichnet, daß die Schneidkanten (42) derart ausgerichtet sind, daß sie einen schräg radial nach außen gerichteten Schneiddruck erzeugen.

9. Kunststoffschweißgerät nach einem der Ansprüche (4) bis (8),
dadurch gekennzeichnet, daß das Messerelement (26, 36) am ausgangsseitigen Ende der Förderwalze (11, 38) befestigt ist.

10. Kunststoffschweißgerät nach einem der Ansprüche (1) bis (9),
dadurch gekennzeichnet, daß die Transporteinrichtung eine um eine Schneckendrehachse rotierbare Transportschnecke (21) aufweist und daß das Messerelement (26, 36) koaxial auf der Transportschnecke (21) am eingangsseitigen Ende angebracht ist.

11. Kunststoffschweißgerät nach einem der Ansprüche (4) bis (8) und Anspruch (10),
dadurch gekennzeichnet, daß Förderwalze (11, 38) und Transportschnecke (21) koaxial angeordnet und drehfest miteinander verbunden sind, wobei das Messerelement (26) zwischen beiden angeordnet ist.

12. Kunststoffschweißgerät nach Anspruch (11),
dadurch gekennzeichnet, daß das Hesserelement (26, 36) zwischen Transportschnecke (21) und Förderwalze (11, 38) eingespannt ist.

## Claims

1. Plastics welding appliance (1) having at least one feed channel (9, 39) and associated with it a feed device (11, 38) for a plastics strand, the feed channel (9, 39) or the feed channels emerging by way of a respective opening into a comminuting device which has a cutter element (26, 36) rotatable about a cutter rotation axis and with at least one cutter (32, 41) having a cutting edge (42), and a conveying and plastifying device (20, 21, 22), for plastifying and extruding the plastics material, adjoining the comminuting device, characterised in that the rotation surface generated by the cutting edge(s) (33, 42) upon rotation of the cutter element (26, 36), when projected towards the cutter rotation axis, intersects the cutter rotation axis, and in that at least a part located in the rotation surface in the region of the opening of the feed channel (9, 39) or parts located in the rotation surface in the region of the feed channels is or are formed as counter cutters.

2. Plastics welding appliance according to claim (1), characterised in that the rotation surface is a plane perpendicular to the cutter rotation axis.

3. Plastics welding appliance according to claim (1) or (2), characterised in that the cutter element (26, 36) is equipped with a plurality of cutters (32, 41).

4. Plastics welding appliance according to one of claims (1) to (3), characterised in that the feed device has a feed roller (11, 38) rotatable about a roller rotation axis, and the feed channel (9, 39) or feed channels respectively extends or extend in the region of the feed roller (11, 38) at least along part of it parallel to the roller rotation axis and is or are open towards the feed roller (11, 38), and that the feed roller (11, 38) bears profiling (12) which reaches into the feed channel (9, 39) or feed channels and which effects feeding displacement of the plastics strand.

5. Plastics welding appliance according to claim (4), characterised in that the profiling is formed as at least one helical feeding fin (12).

6. Plastics welding appliance according to claim (5), characterised in that the profiling is constructed with feeding fins extending in multiple start formation.

7. Plastics welding appliance according to claim (6), characterised in that the feed channel (9) or the feed channels, adjoining the respective opening, has or have a part section of closed construction.

8. Plastics welding appliance according to one of claims (4) to (7), characterised in that the cutting edges (42) are so oriented that they produce outwardly directed cutting pressure inclined to the radial.

9. Plastics welding appliance according to one of claims (4) to (8), characterised in that the cutter element (26, 36) is secured at the outlet end of the feed roller (11, 38).

10. Plastics welding appliance according to one of claims (1) to (9), characterised in that the conveying device has a conveying screw (21) rotatable about the screw rotation axis and that the cutter element (26, 36) is fitted co-axially on the conveying screw (21) at its inlet end.

11. Plastics welding appliance according to one of claims (4) to (9) and claim (10), characterised in that the feed roller (11, 38) and the conveying screw (21) are arranged co-axially and connected rotationally fast to each other, the cutter element (26) being arranged between the two of them.

12. Plastics welding appliance according to claim (11), characterised in that the cutter element (26, 36) is clamped between the conveying screw (21) and the feed roller (11, 38).

## Revendications

1. Soudeuse (1) pour matières thermoplastiques, comprenant au moins un canal de convoyage (9, 39) et un dispositif de convoyage (11, 38) affecté audit canal et destiné à un boudin de matière synthétique, le canal de convoyage ou les canaux de convoyage débouchant respectivement, par l'intermédiaire d'une ouverture, dans un dispositif de fragmentation équipé d'un élément (26, 36) à lames, pouvant tourner autour d'un axe de rotation de lames et muni d'au moins une lame (32, 41) présentant un bord tranchant (42), un dispositif de transport et un dispositif de plastification (20, 21, 22) se rattachant au dispositif de fragmentation, en vue de la plastification et de l'expulsion de la matière synthétique,
caractérisée par le fait que la surface de rotation, respectivement engendrée par le ou les bord(s) tranchant(s) (33, 42) lors de la rotation de l'élément (26, 36) à lames, coupe l'axe de rotation des lames par son prolongement dirigé vers ledit axe de rotation des lames ; et par le fait qu'au moins une partie de la surface de rotation, située dans la région de l'ouverture du canal de convoyage (9, 39), ou respectivement les parties de ladite surface qui sont situées dans la région des canaux de convoyage, est ou sont respectivement réalisée(s) en tant que contre-lame(s).

2. Soudeuse pour matières thermoplastiques, selon la revendication 1,
caractérisée par le fait que la surface de rotation est un plan se dressant perpendiculairement à l'axe de rotation des lames.

3. Soudeuse pour matières thermoplastiques, selon la revendication 1 ou 2,
caractérisée par le fait que l'élément (26, 36) à lames est équipé d'une pluralité de lames (32, 41).

4. Soudeuse pour matières thermoplastiques, selon l'une des revendications 1 à 3,
caractérisée par le fait que le dispositif de convoyage présente un cylindre convoyeur (11, 38) pouvant tourner autour d'un axe de rotation, et le canal de convoyage (9, 39) ou les canaux de convoyage s'étend(ent) respectivement, dans la région dudit cylindre convoyeur (11, 38), parallèlement à l'axe de rotation dudit cylindre par au moins un segment considéré, et est ou sont respectivement ouvert(s) en direction dudit cylindre convoyeur (11, 38) ; et par le fait que le cylindre convoyeur (11, 38) porte un profilage (12) s'engageant respectivement dans le canal de convoyage (9, 39) ou dans les canaux de convoyage, et provoquant un mouvement de convoyage du boudin de matière synthétique.

5. Soudeuse pour matières thermoplastiques, selon la revendication 4,
caractérisée par le fait que le profilage est réalisé sous la forme d'au moins une membrure hélicoïdale de convoyage (12).

6. Soudeuse pour matières thermoplastiques, selon la revendication 5,
caractérisée par le fait que le profilage est réalisé sous la forme de membrures de convoyage s'étendant en un agencement à spires multiples.

7. Soudeuse pour matières thermoplastiques, selon la revendication 6,
caractérisée par le fait que le canal de convoyage (9) ou les canaux de convoyage présente(nt), respectivement, un segment partiel voisin de l'ouverture considérée et muni d'une réalisation fermée.

8. Soudeuse pour matières thermoplastiques, selon l'une des revendications 4 à 7,
caractérisée par le fait que les bords tranchants (42) sont orientés de manière à engendrer une pression de sectionnement dirigée à l'oblique vers l'extérieur dans le sens radial.

9. Soudeuse pour matières thermoplastiques, selon l'une des revendications 4 à 8,
caractérisée par le fait que l'élément (26, 36) à lames est fixé à l'extrémité située du côté sortie du cylindre convoyeur (11, 38).

10. Soudeuse pour matières thermoplastiques, selon l'une des revendications 1 à 9,
caractérisée par le fait que le dispositif de transport présente une vis sans fin transporteuse (21) pouvant tourner autour d'un axe de rotation ; et par le fait que l'élément (26, 36) à lames est installé coaxialement sur la vis sans fin transporteuse (21), à l'extrémité située du côté entrée.

11. Soudeuse pour matières thermoplastiques, selon l'une des revendications 4 à 8 et la revendication 10,
caractérisée par le fait que le cylindre convoyeur (11, 38) et la vis sans fin transporteuse (21) sont disposés coaxialement et sont assujettis l'un à l'autre en rotation, l'élément (26) à lames étant interposé entre les deux.

12. Soudeuse pour matières thermoplastiques, selon la revendication 11,
caractérisée par le fait que l'élément (26, 36) à lames est enserré entre la vis sans fin transporteuse (21) et le cylindre convoyeur (11, 38).
